Europäisches Patentamt

European Patent Office

Office européen des brevets

(19)

(11) Numéro de publication: **0 039 643**
A1

# (12) DEMANDE DE BREVET EUROPEEN

(21) Numéro de dépôt: 81400699.5

(22) Date de dépôt: 05.05.81

(51) Int. Cl.³: **F 16 K 17/22,** F 16 K 37/00,
F 15 B 20/00

(30) Priorité: 07.05.80 FR 8010167

(43) Date de publication de la demande: 11.11.81
Bulletin 81/45

(84) Etats contractants désignés: **DE GB IT**

(71) Demandeur: **MESSIER-HISPANO-BUGATTI (S.A), 5, rue
Louis Lejeune, F-92120 Montrouge (FR)**

(72) Inventeur: **Schott, Marcel, 3, rue Emmanuel Chabrier,
F-78330 Fontenay-le-Fleury (FR)**
Inventeur: **Haas, Jean-Louis, 37, Boulevard Pasteur,
F-75015 Paris (FR)**

(74) Mandataire: **Flavenot, Bernard, Société S.E.D.I.C. 40 rue
Victor Basch, F-92120 Montrouge (FR)**

(54) **Fusible fluidique.**

(57) Le fusible fluidique est constitué d'un corps cylindrique creux (1) dans lequel est logé un clapet (23) venant en butée contre un siège (4), et définissant ainsi deux logements (5, 6) respectivement reliés à des moyens d'amenée (7), et à une sortie (10) et de caractérise par le fait qu'il comprend des moyens pour commander le déplacement du clapet (23), qui sont constitués par une ligne à retard fluidique.

Application comme organe de sécurité sur les aéronefs.

EP 0 039 643 A1

FUSIBLE FLUIDIQUE

1

La présente invention concerne les fusibles fluidiques.

Ces éléments sont particulièrement utilisés dans le domaine aéronautique entre la source de fluide sous pression et un organe de commande de différentes manoeuvres, comme par exemple les vérins, les amortisseurs verrouillables, etc.

En effet, comme on sait que ces organes peuvent être le siège de pannes dont les fuites de fluide sont les plus courantes, notamment à cause des joints défectueux.

On conçoit donc que pour éviter que la source de fluide ne se tarisse très vite, ou le moins possible, il est donc nécessaire de disposer de protection plus particulièrement dans les aéronefs. Ces protections existent et sont dénommées par les techniciens fusibles fluidiques.

Par fusible fluidique, il faut entendre un dispositif qui, monté en série sur une conduite, entre une source de fluide et une utilisation en vue d'une manoeuvre, permet de déterminer et fermer la conduite lorsque, soit des fuites se produisent à l'utilisation, ou soit que celle-ci demande un débit de ce fluide exceptionnellement élevé.

Il existe déjà des réalisations de fusibles fluidiques.

Notamment, il en existe une qui comprend un corps cylindrique creux, une amenée et une sortie du fluide dans le corps, un siège de clapet réalisé dans le corps entre l'entrée et la sortie pour définir dans

2

celui-ci deux principaux logements, un clapet solidaire d'un piston formant un ensemble rigide. Cet ensemble forme avec la paroi du corps qui se trouve entre l'entrée et la sortie, une perte de charge. Ceci fait que la grande majorité du fluide est obligée de passer dans cette perte de charge pour aller à l'organe de commande. En théorie, cette perte de charge est constante et parfaitement déterminée. Mais, comme elle est réalisée entre deux pièces en mouvement, elle varie souvent, et ces variations conséquentes sont ressenties par l'organe à commander qui peut ainsi être soumis à des oscillations parasites.

De plus, on a démontré que ces pièces en mouvement entre l'entrée et la sortie ne présentaient pas toute la sécurité voulue et pouvaient même être le siège d'inconvénients identiques à ceux que l'on veut éliminer par l'adoption de ces fusibles fluidiques.

Aussi, la présente invention a pour but de pallier au moins en partie ces inconvénients.

Plus particulièrement, la présente invention a pour objet un fusible comprenant :

- un corps cylindrique creux fermé
- un siège de clapet dans le corps définissant un premier et second logements
- des moyens d'amenée de fluide sous pression dans le premier logement à travers une première perte de charge
- une sortie dudit fluide du deuxième logement
- un clapet apte à coopérer avec ledit siège et des moyens pour commander le déplacement du clapet contre le siège quand des pertes de fluide se produisent à la sortie,

caractérisé par le fait que les moyens pour commander le déplacement du clapet sont constitués par une ligne à retard fluidique ayant un temps de réponse fonction de la différence de pression dudit fluide avant et après ladite première perte de charge.

Selon une autre caractéristique de la présente invention, ladite ligne à retard fluidique comprend un piston coulissant dans le premier logement pour délimiter une première et deuxième chambres, des moyens pour amener le fluide sous pression dans la première chambre à travers une deuxième perte de charge, le piston étant apte à coulisser dans le premier logement de façon que la sortie de ladite première perte de charge débouche au moins en partie dans la seconde chambre, et des moyens de liaison entre le piston et le clapet.

Selon une autre caractéristique de la présente invention, les moyens de liaison entre ledit piston et ledit clapet sont constitués par deux manchons coulissants l'un dans l'autre respectivement solidaires l'un dudit piston, et l'autre dudit clapet, les deux dits manchons formant une enceinte fermée à volume variable contenue dans ladite seconde chambre et d'une mise en communication fluidique entre l'intérieur de ladite enceinte et ladite deuxième chambre.

Selon une autre caractéristique de la présente invention, le fusible comporte des moyens de verrouillage du clapet, dans sa position plaqué contre ledit siège.

Selon une autre caractéristique de la présente in-

4

vention, le fusible comporte des moyens de visualisation de la position stable verrouillée du clapet. Selon une autre caractéristique de la présente invention, le fusible comporte des moyens de déverrouillage par commande extérieure.

D'autres caractéristiques et avantages de la présente invention apparaîtront au cours de la description suivante donnée en regard des dessins annexés à titre illustratif mais nullement limitatif, dans lesquels :

- la figure 1 représente, vue en coupe longitudinale, un mode de réalisation d'un fusible fluidique selon l'invention dans sa position ouverte ou de repos, et,

- la figure 2 représente, vue en coupe, la même réalisation selon la figure 1, du fusible fluidique dans sa position "travail" ou fermée.

Les deux figures représentant la même réalisation, les mêmes références désigneront les mêmes éléments, ensembles ou sous-ensembles.

Le fusible fluidique représenté sur les deux figures comprend essentiellement un corps 1 de préférence cylindrique de révolution définissant une cavité creuse 2. Cette cavité comprend un retreint 3 usiné pour former un siège 4 sur lequel peut venir coopérer par application un clapet de préférence plan. Le plan, passant par ce siège, délimite dans la cavité 2 deux logements 5 et 6. Le corps comprend un conduit d'amenée de fluide 7 qui peut être parcouru par un fluide sous pression. Cette amenée est terminée par un orifice 8 calibré. Cet orifice 8 constitue en fait une perte de charge qu'il sera

5

nécessaire d'adapter à chaque cas particulier.
Si l'amenée 7 débouche dans le logement 5, une
conduite de sortie 10 est réalisée dans le deuxième
logement 6, de façon que, comme il sera explicité
ci-après, le fluide qui est amené par la conduite
d'arrivée 7 ressorte du corps 1 par la sortie 10
en étant passé obligatoirement à travers l'orifice
défini par les bords du siège 4. Le fond 11 du corps
1 comprend une ouverture 12 fermée par une valve
constituée par un clapet 13 s'appuyant sur les bords
de l'orifice 12 au moyen d'un ressort poussant 14.
Cette valve est située dans un conduit 15 qui relie
l'orifice 12 à la conduite d'amenée 7, ce conduit
15 débouchant en 16 en aval de l'orifice calibré 8.
De plus, la paroi du clapet 13 comporte un orifice
17 constituant un diaphragme, c'est-à-dire une perte
de charge donnée, permettant au fluide arrivant par
la conduite d'arrivée 7 et le conduit 15 de pouvoir
passer constamment à travers la valve, mais d'une
façon contrôlée.
Un piston 18 est disposé dans le logement 5 et délimite dans celui-ci deux chambres 19 et 20 qui,
comme le piston est apte à coulisser, sont à volume
variable. Ainsi, le fluide qui est amené par le
conduit 15 et qui passe par le diaphragme 17 peut
remplir cette chambre fermée 19.
Sur son autre face à celle opposée au clapet 13, le
piston 18 porte un manchon 21 qui se déplace par
coulissement sur la face interne 9 du logement 5.
Ce manchon 21 emboîte un deuxième manchon 22 fermé
par une pièce plane 23, de manière à former une
enceinte fermée 24, mais qui, du fait que les deux

6

manchons 21 et 22, peuvent coulisser l'un dans l'autre, est à volume variable. Ces deux manchons coulissant, un ressort 25 de poussée appuyant respectivement sur le piston 18 et sur la pièce plane 23 tend à maintenir éloignés ces deux éléments 18 et 23.

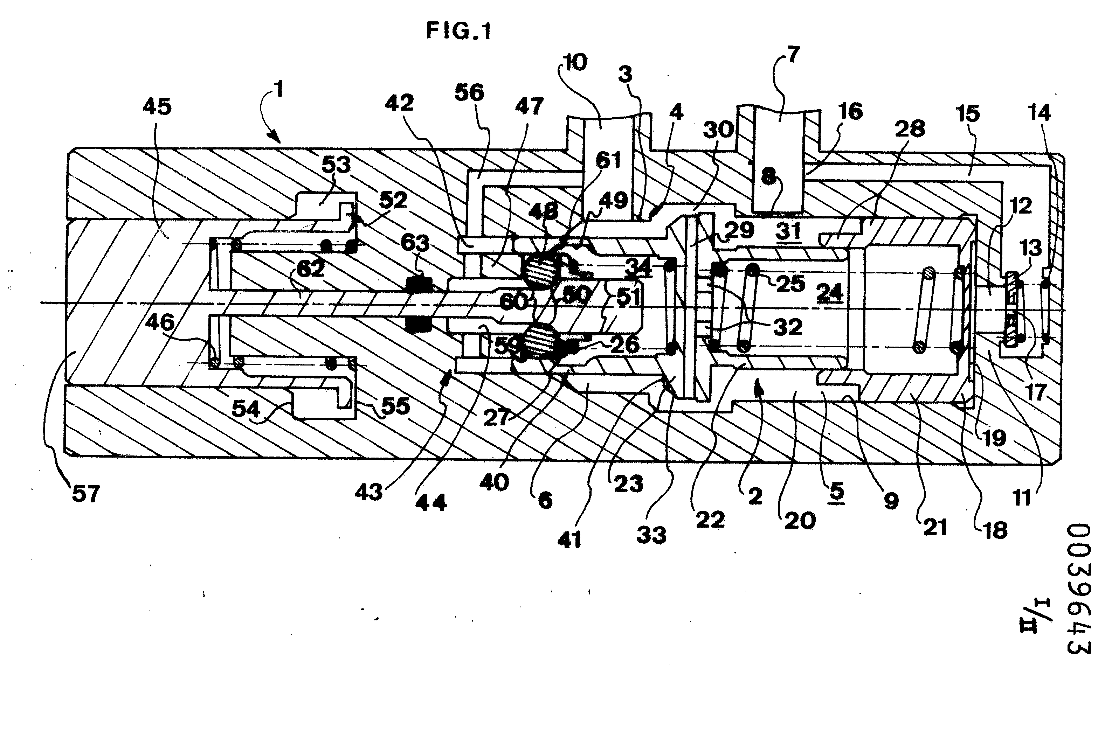

En fait, la pièce plane 23 est constituée sensiblement par un disque, qui, dans ce mode de réalisation préféré, est de révolution, dont le diamètre extérieur est inférieur à celui du logement 5 dans lequel il est amené à se déplacer, mais, bien entendu, supérieur à celui du siège 4. De cette façon, ce disque peut constituer, si sa face 33 est bien usinée, un clapet pouvant coopérer avec le siège 4. Pour éloigner ce clapet du siège, il est soumis à l'effort d'un autre ressort 26 de contre-réaction appuyant, d'une part, sur le clapet et, d'autre part, sur un point 27 fixe sur le corps 1. Les deux ressorts 26 et 25 sont en fait calibrés pour que le fusible en position repos ou ouvert, comme représenté sur la figure 1, le piston 18 soit dans le fond du logement 5 (chambre 19 à volume minimal) et le clapet 23 suffisamment éloigné du siège 4. En plus, la longueur du manchon 21 est choisie de préférence supérieure à celle du manchon 22 et, de plus, en valeur absolue suffisamment grande pour que, comme il sera explicité ci-après, la partie 28 puisse obturer l'orifice 8 quand le piston arrive en fin de course (chambre 20 à volume minimal). Enfin, l'enceinte 24 délimitée par les deux manchons est alimentée en fluide par une conduite auxiliaire 29 prenant une partie du fluide passant entre le disque et la paroi du logement en 30 et le conduisant dans l'enceinte, ce conduit est réalisé par une percée réalisée dans la masse même du disque. Ce conduit 29 réalise une certaine perte de charge qui pourra être éventuellement ajustée ou calculée en fonction des besoins.

Le fusible hydraulique tel que décrit ci-dessus fonctionne de la façon suivante.

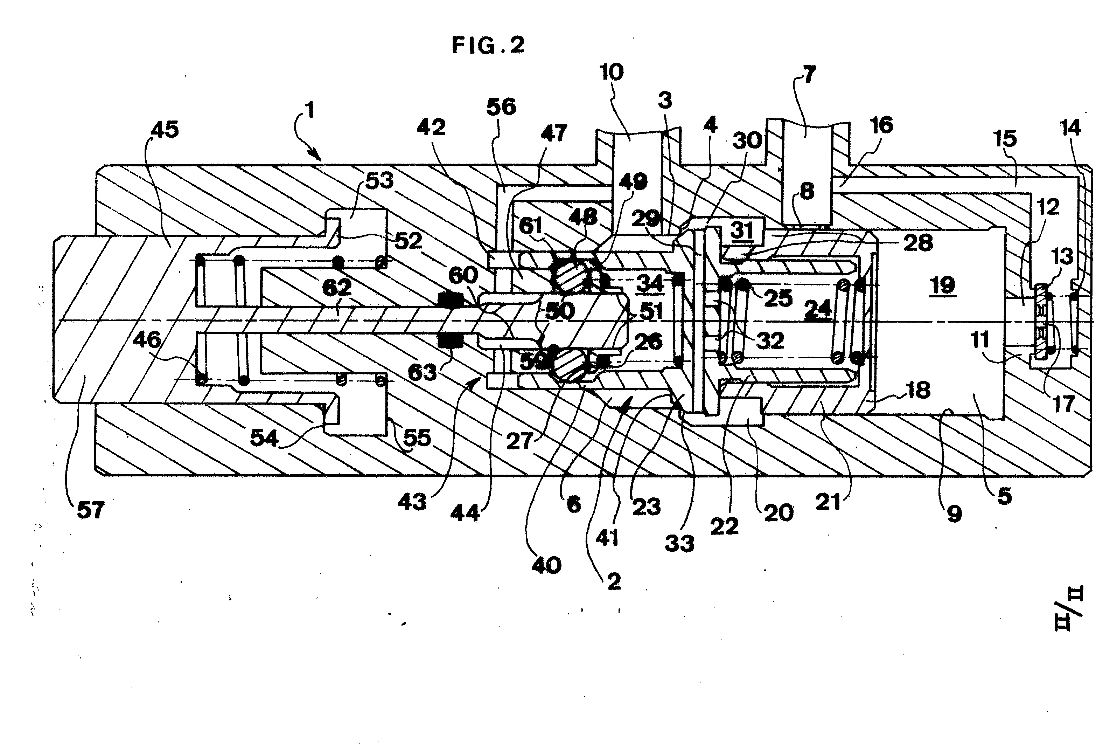

Ce fonctionnement sera mieux compris en se référant de façon comparative aux deux figures 1 et 2.

Il est tout d'abord supposé que la figure 1 représente l'état de repos. Si l'on admet qu'un organe extérieur doit être alimenté avec une certaine quantité de fluide, ce qui est très facile à déterminer (comme par exemple les vérins), par une source de fluide à une pression déterminée, on devra très facilement, connaissant les pertes de charge à traverser pour alimenter l'organe, déterminer le temps de passage du fluide dans le fusible.

Dans ce cas, alors le fluide sous pression va être envoyé simultanément dans la sortie 10, premièrement à travers l'orifice 8, l'espace 30, le siège 4, deuxièmement, dans le conduit 29, les orifices 32 et dans l'enceinte 24, et enfin troisièmement, dans le conduit 15 et à travers le diaphragme 17 dans la chambre 19.

De ce fait, il règne dans la chambre 19 une pression qui est celle disponible dans la conduite d'arrivée 7 en amont de l'orifice 8. Par contre, sur l'autre face du piston, il règne la pression dans la deuxième chambre 20, c'est-à-dire en fait sur la section définie par celle de la bague 21, et

8

enfin, la pression dans l'enceinte 24 alimentée par le conduit 29 et les orifices 32.

La pression résultante est alors donnée par le quotient de la somme des deux forces des pressions définies ci-dessus, plus celle donnée par le ressort, par la section totale du piston.

On obtient une différence de pression sur les deux faces du piston. Dès que le fluide sous pression arrive par le conduit 7, le piston commence à coulisser lentement en comprimant le ressort 25. Pendant ce temps, si l'organe fonctionne correctement, il recevra, par l'intermédiaire du conduit 10, sa quantité désirée de fluide et alors l'alimentation de l'organe en fluide sera arrêtée avant que le piston ait atteint sa course comme il sera décrit ci-après.

Bien entendu, en arrêtant l'alimentation du fluide sous pression, le fusible revient à son état de repos comme illustré sur la figure 1, le fluide étant refoulé notamment de la chambre 19 en soulevant le clapet 13.

Par contre, si une fuite d'huile se produit en aval du fusible, c'est-à-dire après la sortie 10, un fort déséquilibre de pression va se produire entre la pression dans la conduite d'arrivée 7 et après l'orifice 8, donc dans la chambre 20, et, bien entendu, l'enceinte 24.

De ce fait, le piston va coulisser plus rapidement en comprimant le ressort 25 et par l'extrémité 28 du manchon 21 venir buter contre le clapet 23 pour alors le pousser à l'encontre du ressort 26, jusqu'à ce que, d'une part, le clapet vienne en contact avec le siège 4 pour couper le passage entre l'entrée 7 et la sortie 10 et, d'autre part, la partie obturatrice 28 vienne obturer l'orifice 8 pour éviter par sécurité toute fuite supplémentaire.

Le piston 18 combiné avec l'enceinte 24, commandant le clapet 23, constitue une ligne à retard fluidique dont le temps de réponse est bien fonction de la différence des pressions du fluide avant et après la perte de charge 8 de l'entrée, puisque, d'une façon très simplifiée, le piston s'est déplacé très lentement quand cette différence est faible et beaucoup plus rapidement quand elle est forte.

Cette position fermée est particulièrement illustrée sur la figure 2, sur laquelle on constate que le fusible a bien joué son rôle de détection et d'obturation pour éviter de vider la source d'alimentation en fluide sous pression.

Une telle réalisation est avantageuse mais elle ne peut fonctionner correctement que si elle comprend des moyens de verrouillage irréversibles, au moins du clapet, dans sa position, placé contre son siège. Le fusible illustré comprend des moyens de verrouillage irréversibles sans, bien entendu, une action extérieure pour que ce fusible puisse fonctionner de façon répétitive.

Ces moyens comprennent une patte qui, en fait, est une bague 40 située sur la face 41 (ou 33) du clapet 23, et d'une longueur suffisante pour pénétrer dans une gorge circulaire 42 complémentaire réalisée dans le fond 43 du corps 1, autour d'un alésage 44. Cet alésage traverse de part en part le corps 1 et emprisonne une tige 45 formant piston du fait du

10

joint 63, coopérant avec un ressort 46 tendant à
faire sortir la tige 45 du corps 1.

Dans la paroi 47 entre la gorge 42 et l'alésage 44,
sont réalisés un ou plusieurs perçages 59 dans lesquels sont disposées des pièces comme des billes 48
d'un diamètre supérieur à cette paroi 47.

La bague 40 comporte une ou plusieurs gorges complémentaires 49 pouvant coopérer avec les billes 48,
ces dernières pouvant se loger partiellement dans
les gorges complémentaires 49. De son côté, la tige
comporte une surface inclinée 50 qui aboutit à une
surface plane 51, ces surfaces inclinée 50 et plane
51, sont destinées à coopérer avec les billes 48
comme il sera expliqué ci-après. Enfin, pour limiter
le déplacement de la tige 45, elle comprend un ergot
52 pouvant se déplacer dans un orifice 53 dont les
deux bords délimitent le déplacement possible de
la tige.

Il est, de plus, à noter que la gorge 42 et l'espace
34 compris dans la bague 40, sont reliés par un
conduit d'évacuation 56 à la sortie 10 du fusible.
L'extrémité 57 de la tige 45 est conformée en un
bouton poussoir sur lequel il sera possible d'agir
comme il sera décrit ci-après, pour obtenir un réamorçage du fusible ou un déverrouillage. La longueur
de la tige 45 est, de plus, déterminée pour que,
comme il sera décrit aussi ci-après, cette extrémité
57, en forme de bouton, puisse énerger de l'alésage
44, comme cela apparaît sur la figure 2.

Le fonctionnement des moyens de verrouillage et de
déverrouillage est le suivant.

Il est tout d'abord précisé que ces moyens ne fonctionnent que lorsque le clapet 23 est arrivé ou presque en butée contre le siège 4, comme décrit précédemment.

Aussi, quand le clapet 23 s'approche très près du siège 4, les gorges 49 se positionnent en regard des billes 48.

Comme la tige 45 est soumise à un effort de poussée, par le ressort 46, mais surtout due à la pression dans l'espace 34 (pression résultante sur la section de la tige au niveau 62), la surface inclinée 50, par un effet de rampe, transforme la force exercée par le ressort 46, dans le sens général de la tige, en une autre force, dans le cas de la figure, perpendiculaire, appliquée aux billes 48 qui vont alors se loger dans les gorges correspondantes 49. L'alésage 44 est libre et le ressort 46 peut donc continuer à pousser la tige jusqu'à ce que l'ergot 52 vienne contre la butée 54. De ce fait, la paroi plane 51 de la tige se place sous les billes 48 et les bloque dans les gorges 49, maintenant le clapet 23 contre son siège. De plus, même si le clapet était un peu fuyant, la partie 28 du manchon 21 solidaire du piston 18, assurerait en sécurité additionnelle l'obturation de l'orifice 8.

Du fait que les billes 48 sont logées dans les gorges 49, le clapet 23 reste en position verrouillée contre son siège 4.

De cet état de fait, la tige 43 étant déplacée, l'extrémité 57 a émergé du corps 1 pour constituer un dispositif de visualisation de la position verrouillée du clapet.

Toutes les interventions seront alors possibles sur l'organe défectueux et surtout on pourra éviter que la source de fluide ne s'épuise.

Ces interventions finies, il est possible de déverrouiller le clapet de son siège. Pour cela, il est nécessaire d'exercer sur le bouton poussoir constitué par l'extrémité 57 qui a émergé du corps 1, une force pour rentrer la tige 45 dans ce corps 1 à l'encontre de la poussée du ressort 46. Lorsque la tige 45 a suffisamment glissée, le bas 60 de la rampe 50 est arrivé en regard des billes 48 qui tombent, poussées notamment par les bords obliques 61 des gorges 49 en les libérant notamment sous la pression du ressort 26 poussant le clapet 23.

Le clapet s'éloigne alors de son siège 4 et va reprendre sa position d'équilibre en relation avec le ressort 25 (si le fluide a été coupé, le piston est revenu sur le fond 11 du corps) comme représenté sur la figure 1. Le déplacement de la tige 45, quand elle est rentrée, est limité par l'ergot 52 qui vient s'arrêter contre la butée 55.

Le mode de réalisation du fusible qui a été décrit ci-dessus est particulièrement avantageux.

En effet, il permet principalement d'éviter des pertes importantes de fluide et, de plus, d'indiquer de façon visible quand des pertes se sont produites.

Mais, il est surtout avantageux dans sa fonction car les moyens constituant la ligne à retard fluidique est indépendant en grande partie des moyens de verrouillage du clapet.

Ainsi, le piston 21 coulisse dans la plupart des cas sans déplacer le clapet 23.

Ce clapet ne se déplace en fait qu'en fin de course du piston 21 et uniquement dans le cas exceptionnel

13

de fuite.

En effet, le piston de la ligne à retard n'a pas à vaincre d'autres efforts de pivotement dans le fonctionnement normal du fusible que ceux contre la paroi 9 du cylindre.

Ces avantages qui viennent d'être rappelés ne se retrouvent en aucune façon dans les dispositifs de l'art antérieur car les clapets sont toujours déplacés, ce qui entraîne d'autres pivotements comme par exemple avec les moyens de verrouillage.

14

<u>R E V E N D I C A T I O N S</u>

1/ Fusible fluidique comprenant :

- un corps cylindrique creux (1) fermé,

- un siège (4) de clapet dans ledit corps (1) définissant un premier et second logement (5,6),

- des moyens d'amenée (7) de fluide sous pression dans ledit premier logement (5) à travers une première perte de charge (8),

- une sortie (10) dudit fluide dudit deuxième logement (6),

- un clapet (23) apte à coopérer avec ledit siège (4), et des moyens pour commander le déplacement dudit clapet contre le siège quand des pertes de fluide se produisent à ladite sortie (10),

caractérisé par le fait que lesdits moyens pour commander le déplacement dudit clapet sont constitués par une ligne à retard fluidique ayant un temps de réponse fonction de la différence de pression dudit fluide avant et après ladite première perte de charge.

2/ Fusible selon la revendication 1, caractérisé par le fait que ladite ligne à retard fluidique comprend un piston (18) coulissant dans ledit premier logement (5) pour délimiter une première et deuxième chambre (19,20) des moyens pour amener ledit fluide (15) sous pression dans la première chambre à travers une deuxième perte de charge (17), ledit piston (18) étant apte à coulisser dans ledit premier logement (5) de façon que la sortie de ladite première perte de charge (8) débouche au moins en partie dans ladite seconde chambre (20), et des moyens (21,22,25) de liaison entre ledit piston et ledit clapet.

3/ Fusible selon la revendication 2, caractérisé par le fait que lesdits moyens de liaison entre ledit piston et ledit clapet sont constitués par deux manchons (21,22) coulissant l'un dans l'autre respectivement solidaire l'un dudit piston (18) et l'autre dudit clapet (23), les deux dits manchons formant une enceinte fermée (24) à volume variable contenue dans ladite seconde chambre (20) et d'une mise en communication fluidique (29,30) entre l'intérieur de ladite enceinte (24) et ladite deuxième chambre (20).

4/ Fusible selon la revendication 3, caractérisé par le fait que ledit piston (18) et ledit clapet (23) sont soumis à l'action d'une force (25) tendant à les éloigner l'un de l'autre.

5/ Fusible selon la revendication 4, caractérisé par le fait que ladite force est donnée par un premier ressort (25).

6/ Fusible selon la revendication 3, caractérisé par le fait que ladite mise en communication fluidique (29,30) constitue une troisième perte de charge.

7/ Fusible selon la revendication 6, caractérisé par le fait que ladite troisième perte de charge (29,30) est constituée par la section de passage (30) du fluide entre le clapet et la paroi intérieure dudit premier logement (5), avec une conduite traversante (29) dans ledit clapet (23) pour amener du fluide dans ladite enceinte (24).

8/ Fusible selon l'une des revendications précédentes, caractérisé par le fait que ledit piston (18) comporte une partie obturatrice (28) de ladite première perte de charge (8) quand il arrive à une position sensiblement de fin de course quand

16

des fuites se sont produites.

9/ Fusible selon la revendication 2, caractérisé par le fait que ladite seconde perte de charge (17) est constituée par un diaphragme (17).

10/ Fusible selon la revendication 7, caractérisé par le fait que ledit diaphragme est réalisé dans la paroi (13) d'une valve fluidique.

11/ Fusible selon l'une des revendications précédentes, caractérisé par le fait que ledit clapet se déplace à l'encontre d'une force de rappel (26).

12/ Fusible selon la revendication 11, caractérisé par le fait que ladite force de rappel est donnée par un second ressort (26) prenant appui (27) sur ledit corps (1).

13/ Fusible selon l'une des revendications précédentes, caractérisé par le fait qu'il comporte des moyens de verrouillage dudit clapet (23), dans sa position, plaqué contre ledit siège (4).

14/ Fusible selon la revendication 13, caractérisé par le fait que lesdits moyens de verrouillage comportent une patte (40) solidaire dudit clapet, une encoche (49) dans ladite patte (40), une pièce coulissante (48) dans un perçage (59) dudit corps, des moyens (45,46...) pour soumettre une force de poussée de ladite pièce, lesdites patte (40) et pièce (48) coulissantes étant disposées de façon que lorsque le clapet (23) coopère par contact avec ledit siège (4), ladite pièce (48) vienne se loger dans ladite encoche (49).

15/ Fusible selon la revendication 14, caractérisé par le fait que lesdits moyens pour soumettre une force de poussée sont constitués par une tige coulissante (45) dans un alésage (44) dudit corps (1), des moyens de poussée (46,34) de ladite tige, ladite tige comportant une surface de contact (50) à effet de rampe pour appliquer la force dudit troisième ressort (46) à ladite pièce (48).

16/ Fusible selon la revendication 15, caractérisé par le fait que ladite pièce coulissante est une bille (48).

17/ Fusible selon l'une des revendications 13 à 16, caractérisé par le fait qu'il comporte des moyens de visualisation (57) de la position stable verrouillée dudit clapet (23).

18/ Fusible selon les revendications 15 et 17, caractérisé par le fait que les moyens de visualisation sont constitués par ladite tige (57,45) dont la longueur est déterminée de façon que son extrémité (57) n'émerge dudit corps par ledit alésage (44) que lorsque ledit clapet (23) est en position verrouillée.

19/ Fusible selon l'une des revendications 13 à 18, caractérisé par le fait qu'il comporte des moyens de déverrouillage par commande extérieure.

20/ Fusible selon les revendications 18 et 19, caractérisé par le fait que lesdits moyens de déverrouillage comportent l'extrémité (57) de ladite tige émergeant de l'alésage formant bouton-poussoir de commande de déverrouillage.

# FIG.1

0039643

1/II

FIG.2

0039643

Numéro de la demande

EP 81 40 0699

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée |
|---|---|---|
| A | <u>US - A - 2 656 855</u>  (BOOTH) <br> * Colonne 4, ligne 46 - colonne 5, ligne 27; figures * <br><br> -- | |
| A | <u>FR - A - 811 090</u> (KEBRT) <br> * Page 1, ligne 51 - page 2, ligne 81; figure * <br><br> -- | |
| A | <u>US - A - 3 519 010</u> (HELLING) <br> * Revendications, point:I, figures * <br><br> -- | |
| A | <u>US - A - 3 587 405</u> (HOLMES) <br> * Colonne 7, lignes 38-69; figures 1 et 2 * <br><br> ---- | |

**CLASSEMENT DE LA DEMANDE (Int. Cl.³)**

F 16 K 17/22
             37/00
F 15 B 20/00

**DOMAINES TECHNIQUES RECHERCHES (Int. Cl.³)**

F 16 K
B 64 C
F 15 B
F 16 L
F 17 D
B 60 T
B 60 G

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-06-1981 | V. REETH |

OEB Form 1503.1   06.78